(19) Europäisches Patentamt / European Patent Office / Office européen des brevets

(11) **EP 4 027 539 A1**

(12) **EUROPEAN PATENT APPLICATION**
published in accordance with Art. 153(4) EPC

(43) Date of publication:
**13.07.2022 Bulletin 2022/28**

(21) Application number: **20860020.5**

(22) Date of filing: **25.08.2020**

(51) International Patent Classification (IPC):
**H04B 10/516** (2013.01)

(52) Cooperative Patent Classification (CPC):
**H04B 10/516**

(86) International application number:
**PCT/JP2020/032045**

(87) International publication number:
**WO 2021/044909 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2019 JP 2019163371**

(71) Applicant: **KDDI Corporation**
**Tokyo 163-8003 (JP)**

(72) Inventors:
• **ISHIMURA, Shota**
**Fujimino-shi, Saitama 356-8502 (JP)**
• **KAO, Hsuan-Yun**
**Fujimino-shi, Saitama 356-8502 (JP)**
• **TANAKA, Kazuki**
**Fujimino-shi, Saitama 356-8502 (JP)**
• **NISHIMURA, Kosuke**
**Fujimino-shi, Saitama 356-8502 (JP)**
• **SUZUKI, Masatoshi**
**Fujimino-shi, Saitama 356-8502 (JP)**

(74) Representative: **Pitchford, James Edward et al**
**Mathys & Squire**
**The Shard**
**32 London Bridge Street**
**London SE1 9SG (GB)**

(54) **OPTICAL TRANSMITTER AND OPTICAL TRANSMISSION METHOD**

(57) An optical transmitter configured to transmit an optical signal to a photodiode includes: angle modulation means for performing angle modulation with respect to a transmission signal; and optical tone signal generation means for generating an optical tone signal, and transmits an optical signal that includes a single sideband signal corresponding to an angle modulated transmission electrical signal and the optical tone signal that is disposed on a higher frequency side or a lower frequency side of a frequency band of the single sideband signal.

**FIG. 3**

EP 4 027 539 A1

**Description**

TECHNICAL FIELD

The present invention relates to an optical transmitter and an optical transmission method for transmitting an optical signal to a photodiode.

BACKGROUND ART

Direct detection receivers are conventionally known in optical fiber transmission. Such a direct detection receiver can be constituted by a photodiode and is characterized by being simpler than a coherent receiver that receives an optical signal of which the amplitude, the frequency, or the phase includes information. For example, NPL 1 discloses a method for linearly restoring a complex amplitude of light using only a photodiode.

CITATION LIST

PATENT LITERATURE

[NPL 1] Antonio Mecozzi, Cristian Antonelli, and Mark Shtaif, "Kramers-Kronig coherent receiver," Optica 3, 1220-1227 (2016)

SUMMARY OF INVENTION

TECHNICAL PROBLEM

However, in the method disclosed in NPL 1, complex signal processing needs to be performed on the receiver side. Specifically, an electrical signal obtained from the photodiode is proportional to intensity information of an optical signal, and accordingly, phase information of light needs to be recovered from the intensity information using a relational expression of intensity and phase, which is called "Kramers-Kronig relation". This relation is typically based on transformation that is called Hilbert transformation, and requires complex integral computation. Furthermore, complexity of hardware increases because oversampling of a signal needs to be performed in advance.

SOLUTION TO PROBLEM

The present invention was made under the above circumstances, and has an object of providing an optical transmitter and an optical transmission method with which a complex amplitude of light can be reproduced without performing signal processing at all on the receiver side.

According to an aspect of the present invention, an optical transmitter configured to transmit an optical signal to a photodiode includes: angle modulation means for performing angle modulation with respect to a transmission signal; and optical tone signal generation means for generating an optical tone signal, and transmits an optical signal that includes a single sideband signal corresponding to an angle modulated transmission electrical signal and the optical tone signal that is disposed on a higher frequency side or a lower frequency side of a frequency band of the single sideband signal.

As described above, an optical signal that includes a single sideband signal of an angle modulated transmission electrical signal and an optical tone signal is transmitted, and therefore, when the optical signal is received by a photodiode, unnecessary components becomes constant terms, and only a desired component can be extracted and a complex amplitude of light can be linearly restored.

Other features and advantages of the present invention will be apparent from the following description taken in conjunction with the accompanying drawings. Note that the same reference numerals denote the same or like components throughout the accompanying drawings.

BRIEF DESCRIPTION OF DRAWINGS

FIG. 1 is a diagram showing a spectrum of a received signal in a case where an angle modulated signal made into a single sideband and an optical tone signal are transmitted, and are detected by a photodiode.
FIG. 2 is a diagram showing a spectrum of a received signal in a case where a rectangular wave and an optical tone signal are transmitted and detected by a photodiode.

FIG. 3 is a diagram showing a schematic configuration of an optical transmitter according to an embodiment.

FIG. 4 is a diagram showing a schematic configuration of an optical transmitter according to an embodiment.

FIG. 5 is a diagram showing a schematic configuration of an optical transmitter according to an embodiment.

DESCRIPTION OF EMBODIMENTS

The inventors of the present invention focused on the problems of complex integral computation and complexity of hardware when a direct detection receiver is used, and arrived at the present invention by finding the fact that if an optical signal that satisfies specific conditions is transmitted by a transmitter, signal processing need not be performed on the receiver side.

In the present embodiment, "analog angle modulation" is used as a modulation method. That is, phase modulation (PM) or frequency modulation (FM) is used as the modulation method. Note that the present invention is not limited to these modulation methods. These modulation methods are typically "nonlinear modulation", and accordingly, when a signal before modulation and a modulated signal are compared, the spectrum of the modulated signal is significantly widened compared to a spectrum width before the modulation. However, noise robustness is high when compared to common amplitude modulation and the like, and therefore, these methods are often used for an analog-based system for which a high SN ratio is required. In these angle modulation methods, information is included in the phase or the frequency of a sine wave as expressed by the following expression (in the following expression, information is included in the phase).

$$S(t) = \cos\bigl(\omega_{RF}t + \varphi(t)\bigr) \quad (1)$$

In this case, the amplitude is always constant and does not vary. In the present embodiment, an optical signal is generated using this angle modulation and a single sideband signal of light on the transmitter side, and the optical signal is transmitted. This configuration makes it possible to easily reproduce a complex amplitude of light on the receiver side.

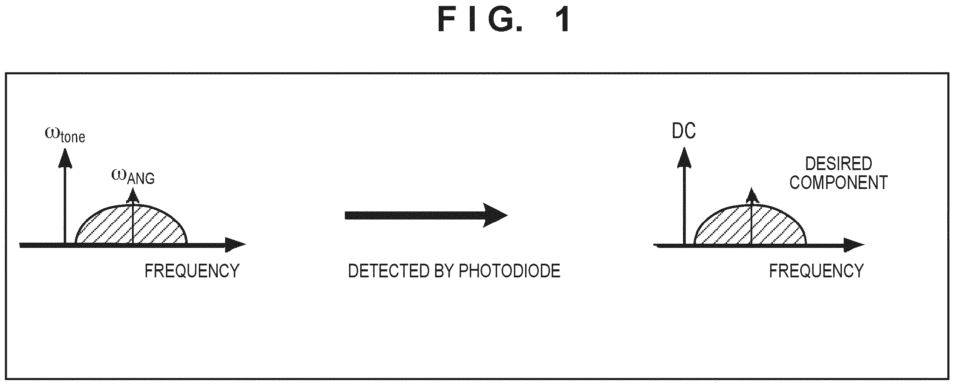

FIG. 1 is a diagram showing a spectrum of a received signal in a case where an angle modulated signal made into a single sideband and an optical tone signal are transmitted, and are detected by a photodiode. With respect to the sheet of FIG. 1, the spectrum of the optical tone signal is shown on the left and the spectrum of the angle modulated signal is shown on the right, as an example. Note that the position of the optical tone signal may be on the lower frequency side or the higher frequency side with respect to the angle modulated signal.

A configuration for receiving such an optical signal using a single photodiode will be considered. When $\omega_{tone}$ represents the frequency of the optical tone signal, $\omega_{ANG}$ represents the frequency of the angle modulated transmission electrical signal, t represents time, and $\varphi$ represents phase, a complex amplitude E(t) of an optical electric field before reception is expressed by the following expression.

$$E(t) = e^{j(\omega_{tone}t)} + e^{j\{\omega_{ANG}t + \varphi(t)\}} \quad (2)$$

In this expression, the first term represents the optical tone signal and the second term represents the angle modulated signal made into a single sideband. The second term is a complex number with respect to Expression (1), because the second term is a single sideband signal and therefore only an upper (or lower) sideband is considered. When this signal is received by a photodiode, an electrical signal that is proportional to the intensity of the optical electric field is output, and the output is expressed by the following expression.

$$I(t) \propto |E(t)|^2 = \left|e^{j(\omega_{tone}t)}\right|^2 + \left|e^{j\{\omega_{ANG}t + \varphi(t)\}}\right|^2 +$$

$$2Re\left[e^{j(\omega_{tone}t)}e^{-j\{\omega_{ANG}t + \varphi(t)\}}\right] \quad (3)$$

In Expression (3), the first term represents the intensity of the optical tone signal and is usually a constant term, and accordingly appears merely as a DC component and does not affect a desired component. Also, the component of the second term is proportional to the intensity of the signal component itself and is usually called "signal-to-signal beat noise (SSBI)". The intensity of a normal signal fluctuates, and accordingly, this term fluctuates over time, interfering with the desired signal, and impairs signal quality. However, in the method according to the present embodiment, angle modulation is adopted, and the amplitude of angle modulation is always constant independently of time. Therefore, similarly to the first term, the second term is a constant term and does not interfere with the desired component. The third term is a beat (multiplication) component of the optical tone signal and the angle modulated signal, and is usually the desired component.

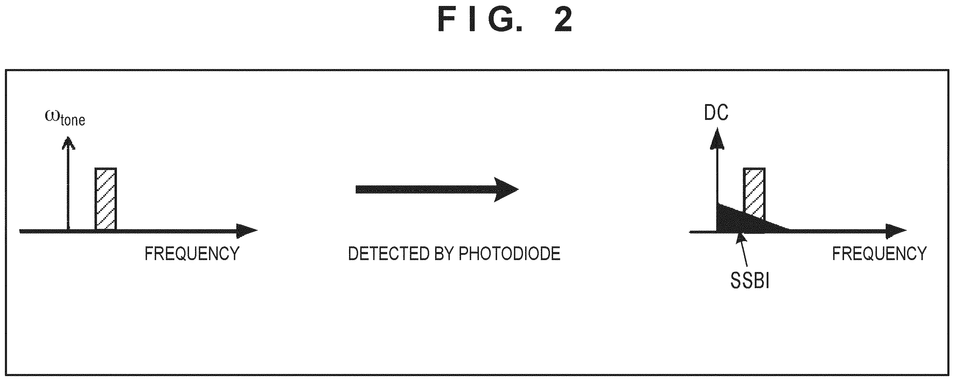

As a result, the desired component can be extracted without being affected by the beat noise. If angle modulation is not performed with respect to the transmission signal (transmission electrical signal) as in the method disclosed in NPL 1, the second term appears as an interfering component. This state is shown in FIG. 2. When a rectangular wave and an optical tone signal are transmitted from the transmitter and are detected by a photodiode on the receiver side, SSBI appears. Therefore, in order to remove SSBI, advanced signal processing needs to be performed using the "Kramers-Kronig relation" described above, for example. According to the present embodiment, a complex amplitude of light can be linearly restored.

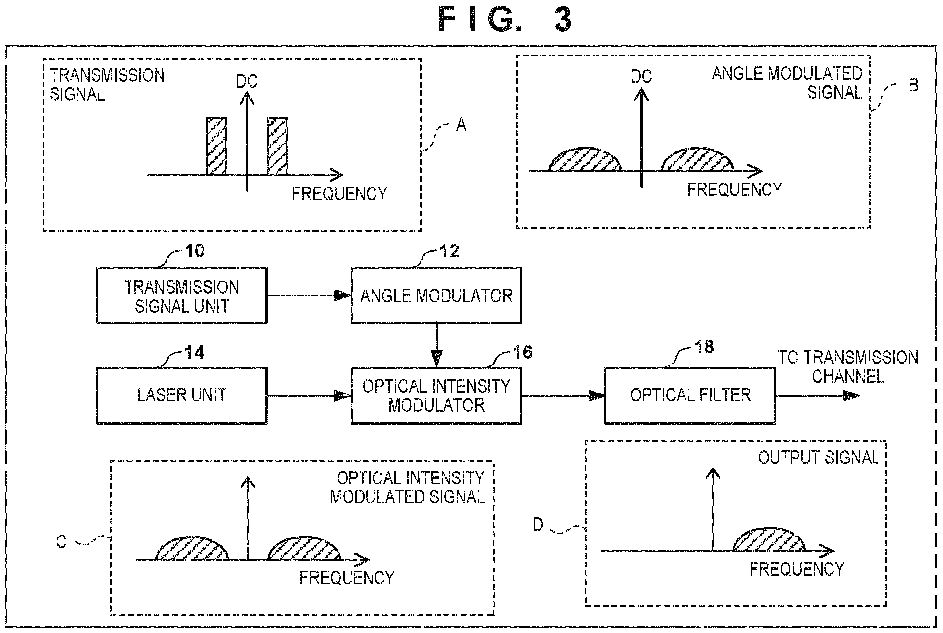

FIG. 3 is a diagram showing a schematic configuration example of an optical transmitter for generating the optical signal shown in FIG. 1. This optical transmitter includes a transmission signal unit 10, an angle modulator 12, a laser unit 14, an optical intensity modulator 16, and an optical filter 18. First, a transmission signal that is to be transmitted is generated by the transmission signal unit 10. The transmission signal has a waveform of a pair of rectangular waves as shown in A in FIG. 3. The transmission signal is input to the electrical angle modulator 12. Through angle modulation performed by the angle modulator 12, the signal becomes a pair of wide band waves that are located at symmetrical positions with respect to a DC component as shown in B. This angle modulated signal is input to the optical intensity modulator 16. An optical intensity modulated signal is a pair of wide band waves as shown in C. This optical intensity modulated signal is input to the optical filter 18, one of the sidebands (in the case shown in FIG. 3, a sideband on the lower frequency side) is removed, and a tone signal and a wide single sideband are generated as shown in D.

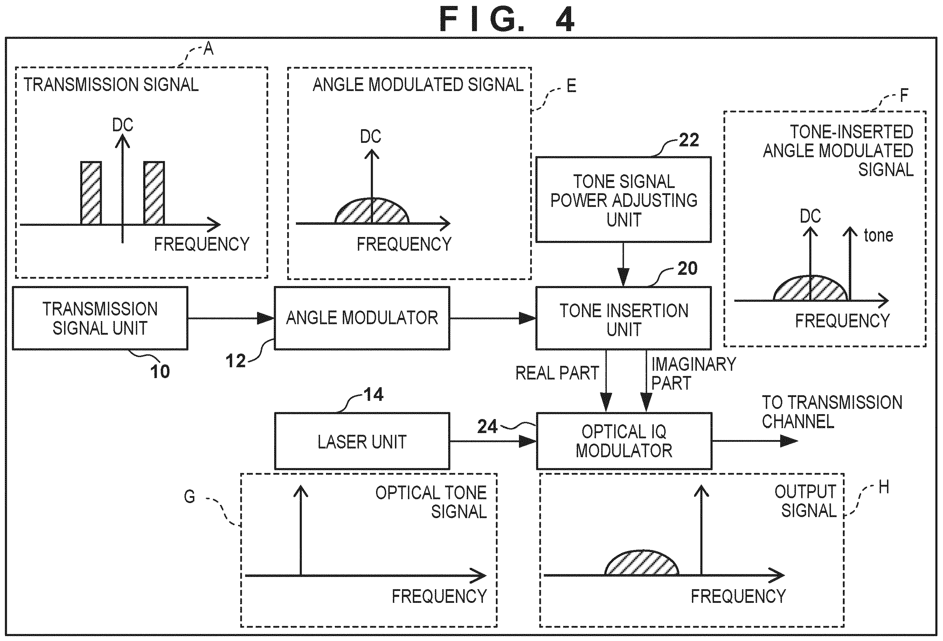

FIG. 4 is a diagram showing another schematic configuration example of an optical transmitter for generating the optical signal shown in FIG. 1. The optical transmitter includes the transmission signal unit 10, the angle modulator 12, the laser unit 14, a tone insertion unit 20, a tone signal power adjusting unit 22, and an optical IQ modulator 24. A transmission signal that is to be transmitted is generated by the transmission signal unit 10. The transmission signal has a waveform of a pair of rectangular waves as shown in A in FIG. 4. The transmission signal is input to the electrical angle modulator 12. Through angle modulation performed with $\omega_{RF}$=0 in the angle modulator 12, the signal becomes a single wide band wave that is symmetrical with respect to a DC component as shown in E. In this optical transmitter, a tone signal is inserted by the tone insertion unit 20 in the electrical domain, and power of the tone signal in the electrical domain is adjusted by the tone signal power adjusting unit 22. The tone is inserted only to a positive frequency or a negative frequency, and therefore, a tone-inserted signal is expressed as a complex number. By inputting an optical tone signal shown in G from the laser unit 14 to the optical IQ modulator 24 and inputting the real part and the imaginary part of the tone-inserted angle modulated signal shown in F from the tone insertion unit 20 to the optical IQ modulator 24, the electrical signal can be converted to an optical signal. At this time, the optical IQ modulator 24 is driven at a null bias point. Then, a tone signal and a wide single sideband are generated as shown in H.

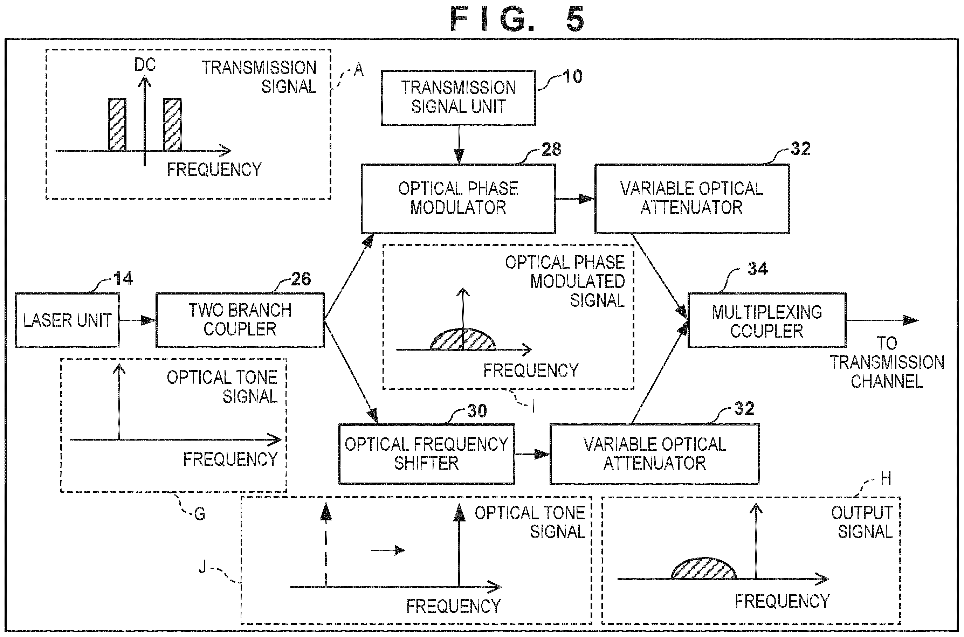

FIG. 5 is a diagram showing another schematic configuration example of an optical transmitter for generating the optical signal shown in FIG. 1. This optical transmitter includes the transmission signal unit 10, the laser unit 14, a two branch coupler 26, an optical phase modulator 28, an optical frequency shifter 30, variable optical attenuators 32, and a multiplexing coupler 34. In the optical transmitters described above, electrical angle modulation is performed, but in this optical transmitter, optical modulation is performed. That is, an optical tone signal shown in G, which is input from the laser unit 14, is divided into two outputs by the two branch coupler 26, and one of the outputs is input to the optical phase modulator 28. When a desired transmission electrical signal is input from the transmission signal unit 10 to the optical phase modulator 28, an optical phase modulated signal shown in I is generated. Thus, it is possible to obtain an angle modulated signal from the transmission electrical signal. The other output from the two branch coupler 26 is input to the optical frequency shifter 30. The optical frequency shifter 30 shifts the frequency of the optical tone signal generated by the laser unit 14 to another frequency as shown in J. Then, the light of which the frequency has been shifted and the angle modulated light are multiplexed by the multiplexing coupler 34, whereby a tone signal and a single sideband signal are generated as shown in H. Note that the variable optical attenuators are used for adjusting power of the lights.

As described above, if an optical signal that is constituted by a tone signal and a single sideband signal is generated by the transmitter, it is possible to reproduce a complex amplitude of light without performing complex signal processing on the receiver side.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2019-163371 filed September 6, 2019, which is hereby incorporated by reference herein.

**Claims**

1.  An optical transmitter configured to transmit an optical signal to a photodiode, comprising:

    angle modulation means for performing angle modulation with respect to a transmission signal; and
    optical tone signal generation means for generating an optical tone signal,
    wherein the optical transmitter transmits an optical signal that includes a single sideband signal corresponding to an angle modulated transmission electrical signal and the optical tone signal that is disposed on a higher frequency side or a lower frequency side of a frequency band of the single sideband signal.

2.  The optical transmitter according to claim 1,
    wherein when $\omega_{tone}$ represents a frequency of the optical tone signal, $\omega_{ANG}$ represents a frequency of the angle modulated transmission electrical signal, t represents time, and $\varphi$ represents phase, a complex amplitude E(t) of the optical signal including the optical tone signal and the angle modulated transmission electrical signal is expressed by the following expression,

$$\mathrm{E(t)} = e^{j(\omega_{tone}t)} + e^{j\{\omega_{ANG}t+\varphi(t)\}} \qquad .$$

3.  The optical transmitter according to claim 1 or 2, further comprising:

    a laser configured to generate the optical tone signal;
    optical intensity modulation means to which the optical tone signal and the angle modulated transmission electrical signal are input and that performs optical intensity modulation; and
    an optical filter configured to remove a signal other than the single sideband signal and the optical tone signal from a signal obtained through the optical intensity modulation.

4.  The optical transmitter according to claim 1 or 2, further comprising:

    a laser configured to generate the optical tone signal;
    tone signal insertion means for inserting a tone signal to the angle modulated transmission electrical signal; and
    optical IQ modulation means to which the optical tone signal, the angle modulated transmission electrical signal, and the tone signal are input and that performs optical IQ modulation.

5.  The optical transmitter according to claim 1 or 2, further comprising:

    a laser configured to generate the optical tone signal;
    a two branch coupler configured to divide the optical tone signal into two optical tone signals;
    optical phase modulation means to which one of the two divided optical tone signals is input and that performs optical phase modulation with respect to a transmission signal and outputs the single sideband signal;
    an optical frequency shifter to which the other of the two divided optical tone signals is input and that disposes the other optical tone signal on a higher frequency side or a lower frequency side of a frequency band of the single sideband signal; and
    a multiplexing coupler configured to multiplex output signals from the optical phase modulation means and the optical frequency shifter.

6.  An optical transmission method for transmitting an optical signal to a photodiode, comprising:

    performing angle modulation with respect to a transmission signal;
    generating an optical tone signal; and
    transmitting an optical signal that includes a single sideband signal corresponding to an angle modulated transmission electrical signal and the optical tone signal that is disposed on a higher frequency side or a lower frequency side of a frequency band of the single sideband signal.

7.  The optical transmission method according to claim 6,
    wherein when $\omega_{tone}$ represents a frequency of the optical tone signal, $\omega_{ANG}$ represents a frequency of the angle modulated transmission electrical signal, t represents time, and $\varphi$ represents phase, a complex amplitude E(t) of the optical signal including the optical tone signal and the angle modulated transmission electrical signal is expressed by the following expression,

$$E(t) = e^{j(\omega_{tone}t)} + e^{j\{\omega_{ANG}t+\varphi(t)\}}.$$

# FIG. 1

$\omega_{tone}$

$\omega_{ANG}$

FREQUENCY

DETECTED BY PHOTODIODE

DC

DESIRED COMPONENT

FREQUENCY

EP 4 027 539 A1

FIG. 2

# FIG. 3

TRANSMISSION SIGNAL

DC

FREQUENCY

A

ANGLE MODULATED SIGNAL

DC

FREQUENCY

B

10
TRANSMISSION SIGNAL UNIT

12
ANGLE MODULATOR

14
LASER UNIT

16
OPTICAL INTENSITY MODULATOR

18
OPTICAL FILTER

TO TRANSMISSION CHANNEL

OPTICAL INTENSITY MODULATED SIGNAL

C

FREQUENCY

OUTPUT SIGNAL

D

FREQUENCY

EP 4 027 539 A1

# FIG. 4

EP 4 027 539 A1

# FIG. 5

TRANSMISSION SIGNAL — A

DC ↑ / FREQUENCY

TRANSMISSION SIGNAL UNIT — 10

OPTICAL PHASE MODULATOR — 28

VARIABLE OPTICAL ATTENUATOR — 32

LASER UNIT — 14

TWO BRANCH COUPLER — 26

OPTICAL PHASE MODULATED SIGNAL

FREQUENCY

MULTIPLEXING COUPLER — 34

TO TRANSMISSION CHANNEL

OPTICAL TONE SIGNAL

FREQUENCY

OPTICAL FREQUENCY SHIFTER — 30

VARIABLE OPTICAL ATTENUATOR — 32

I

G

OPTICAL TONE SIGNAL

FREQUENCY

OUTPUT SIGNAL — H

FREQUENCY

J

EP 4 027 539 A1

## INTERNATIONAL SEARCH REPORT

International application No.

PCT/JP2020/032045

### A. CLASSIFICATION OF SUBJECT MATTER
H04B 10/516(2013.01)i
FI: H04B10/516
According to International Patent Classification (IPC) or to both national classification and IPC

### B. FIELDS SEARCHED
Minimum documentation searched (classification system followed by classification symbols)
H04B10/516

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WANG, Ying et al., "Beyond 100-Gb/s single- | 1,6 |
| Y | sideband direct detection using multi-core fiber | 2-3,7 |
| A | and SSBI elimination", 2017 Opto-Electronics and | 4-5 |
| | Communications Conference (OECC) and Photonics | |
| X | Global Conference (PGC), IEEE, 31 July 2017, pp. | 1,6 |
| | 1-3 | |
| | pp. 1-3 | |
| Y | YOU, Shanhong et al., "400-Gb/s Single-Sideband | 2-3,7 |
| A | Direct Detection Over 7-Core Fiber With SSBI | 4-5 |
| | Cancellation", IEEE Photonics Technology Letters, | |
| | 06 May 2019, vol. 31, issue. 9, pp. 669-672 pp. | |
| | 669-672 | |
| Y | JP 2019-110479 A (NIPPON TELEGRAPH AND TELEPHONE | 2-3,7 |
| A | CORP.) 04 July 2019 (2019-07-04) paragraph [0028] | 1,4-6 |

☐ Further documents are listed in the continuation of Box C.          ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 October 2020 (23.10.2020) | 10 November 2020 (10.11.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT
Information on patent family members

International application No.

PCT/JP2020/032045

| Patent Documents referred in the Report | Publication Date | Patent Family | Publication Date |
|---|---|---|---|
| JP 2019-110479 A | 04 Jul. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019163371 A

**Non-patent literature cited in the description**

- **ANTONIO MECOZZI ; CRISTIAN ANTONELLI ; MARK SHTAIF.** Kramers-Kronig coherent receiver. *Optica,* 2016, vol. 3, 1220-1227